# EUROPÄISCHE PATENTSCHRIFT

(11) **EP 2 892 734 B1**
(45) Veröffentlichungstag und Bekanntmachung des Hinweises auf die Patenterteilung: **14.09.2016**
(21) Anmeldenummer: 13742013.9
(22) Anmeldetag: 29.07.2013
(51) Int. Cl.: B60C 9/00, B60C 9/20, D02G 3/36, D02G 3/48, D07B 1/06

(54) **FAHRZEUGLUFTREIFEN, VORZUGSWEISE NUTZFAHRZEUGLUFTREIFEN**
PNEUMATIC VEHICLE TYRE, PREFERABLY PNEUMATIC COMMERCIAL VEHICLE TYRE
PNEUMATIQUE DE VÉHICULE, DE PRÉFÉRENCE PNEUMATIQUE DE VÉHICULE UTILITAIRE

(30) Priorität: 04.09.2012 DE 102012108173
(43) Veröffentlichungstag der Anmeldung: 15.07.2015
(73) Patentinhaber: Continental Reifen Deutschland GmbH, 30165 Hannover (DE)
(72) Erfinder: KRÜGER, Jörn, 66399 Mandelbachtal (DE); FRIES, Volkmar, 31707 Bad Eilsen (DE); JUSTINE, Carole, 31535 Scharrel (DE); KRAMER, Thomas, 32049 Herford (DE)
(74) Vertreter: Finger, Karsten
(86) Internationale Anmeldenummer: PCT/EP2013/065858
(87) Internationale Veröffentlichungsnummer: WO 2014/037153

(56) Entgegenhaltungen:
- DE-C2- 3 302 673
- JP-A- S60 226 303
- US-A- 4 733 708
- US-A1- 2006 123 862

## Beschreibung

Die Erfindung betrifft einen Fahrzeugluftreifen, vorzugsweise Nutzfahrzeugluftreifen in Radialbauart mit einem Gürtel, welcher wenigstens drei Gürtellagen aufweist, von denen zwei Gürtellagen als sogenannte Arbeitslagen ausgestaltet sind und von denen die radial äußerste Gürtellage als sogenannte Abdecklage ausgestaltet ist, wobei jede dieser Gürtellagen aus in Elastomer eingebetteten Festigkeitsträgern aus Stahlkord besteht und wobei die Stahlkorde jeder dieser drei Gürtellagen zur guten Elastomerhaftung mit Messing beschichtet sind.

Nutzfahrzeugreifen mit einem Gürtel, welcher zwei Arbeitslagen und eine Abdecklage aufweist, sind dem Fachmann bekannt. Üblicherweise weist der Gürtel von Nutzfahrzeugreifen vier Lagen auf, welche aus in Gummimischungen eingebetteten Stahlkorden bestehen. Die radial innerste Lage wird bei einem 4-Lagen-Gürtel als "1.Gürtellage" oder nach ihrer Funktion als "Sperrlage" bezeichnet. Radial außen auf dieser sind die 2. Gürtellage und die 3. Gürtellage in Funktion von sogenannten "Arbeitslagen" angeordnet. Die radial äußere Arbeitslage wird von der 4. Gürtellage, der sogenannten "Abdecklage", abgedeckt.

Die Stahlkorde der 1.Gürtellage weisen in der Regel einen Winkel > 45° in Bezug auf die Umfangsrichtung auf. Die 1. Gürtellage wird aufgrund ihrer Funktion: Sperrung der Beweglichkeit der Arbeitslagen in Umfangsrichtung, als sogenannte "Sperrlage" bezeichnet. Die Stahlkorde der beiden Arbeitslagen weisen einen gleichen Winkel zwischen 15° und 30° in Bezug auf die Reifenumfangsrichtung auf, wobei die Stahlkorde der einen Arbeitslage gegenläufig zu den Stahlkorde der anderen Arbeitslage in Bezug auf die Reifenumfangsrichtung geneigt sind. So sind die Stahlkorde der einen Arbeitslage kreuzend zu den Stahlkorden der anderen Arbeitslage angeordnet. Die Arbeitslagen übernehmen hohe Scher- und Zugkräfte, tragen die Hauptlast im Gürtel und sind daher für die Gürtelhaltbarkeit von besonderer Bedeutung. Die 4. Gürtellage weist Stahlkorde auf, welche einen Winkel zwischen 15° und 30° mit der Umfangsrichtung einschließen. Die 4. Gürtellage, die Abdecklage, hat die Funktion einer Schutzlage für die beiden darunter liegenden Arbeitslagen, indem die Abdecklage eine Barriere für Steine darstellt, die durch das Laufstreifenpaket dringen können. Ohne die Abdecklage würden die Korde der Arbeitslagen durch durchdringende Steine verletzt werden und verstärkt der Korrosion ausgesetzt sein, was am Ende die Traglast, die Haltbarkeit und die Runderneuerungsfähigkeit des Reifens reduzieren würde.

Es ist hinlänglich bekannt, Stahlkorde von Gürtellagen zur besseren Gummianhaftung mit einer Messingbeschichtung zu versehen. Die Stahlkorde aller Lagen von mehrlagigen Gürteln sind immer mit der gleichen Messingzusammensetzung beschichtet. Aus der JP 60226303 A ist es beispielsweise bekannt, die Stahlkorde aller Gürtellagen eines Radialreifens mit einer Messingbeschichtung zu versehen, welche einen Kupferanteil von 60 Gew.% bis 64 Gew.% aufweist. Aus der DE 33 02 673 C2 ist es beispielsweise bekannt, die Stahlkorde aller Gürtellagen eines Radialreifens mit einer Messingbeschichtung zu versehen, welche einen Kupferanteil von 60 Gew.% bis 70 Gew.% aufweist.

Es ist weiterhin bekannt, dass ein hoher Kupferanteil der Messingbeschichtung bei reduzierter Haftkraft zu einer verbesserten Korrosionsbeständigkeit führt und dass ein geringer Kupferanteil der Messingbeschichtung bei einer reduzierten Korrosionsbeständigkeit zu einer verbesserten Haftkraft führt.

Es ist die Aufgabe der Erfindung, einen Fahrzeugluftreifen, vorzugsweise einen Nutzfahrzeugluftreifen mit einem zwei Arbeitslagen und eine Abdecklage aufweisenden Gürtelpaket bereitzustellen, dessen Dauerhaltbarkeit in Bezug auf Korrosionsbeständigkeit und Haftkraft der vorgenannten Gürtellagen verbessert ist.

Die Aufgabe wird gelöst, indem die Messingbeschichtung der Festigkeitsträger der beiden Arbeitslagen einen Kupferanteil von 60 Gew.% bis 65 Gew.% aufweist und indem die Messingbeschichtung der Festigkeitsträger der Abdecklage einen Kupferanteil von 66 Gew.% bis 70 Gew.% aufweist.

Somit ist ein erfindungsgemäßer Fahrzeugluftreifen geschaffen, dessen unterschiedlichen Gürtellagen Stahlkorde aufweisen, welche entsprechend der Hauptanforderungen dieser unterschiedlichen Gürtellagen eine optimiert angepasste Messingbeschichtung aufweisen.

Die Abdecklage, welche für die beiden darunter liegenden Arbeitslagen eine Barriere für Steine in Funktion einer Schutzlage darstellt, weist durch einen Kupferanteil der Messingbeschichtung der Stahlkorde von 66 Gew.% bis 70 Gew.% eine verbesserte Korrosionsbeständigkeit bei leicht reduzierter Haftkraft auf. Die Arbeitslagen hingegen, welche die Hauptlast tragen, weisen durch einen Kupferanteil von 60 Gew.% bis 65 Gew.% der Messingbeschichtung der Stahlkorde eine verbesserte Haftkraft bei leicht reduzierter Korrosionsbeständigkeit auf.

Vorteilhaft ist es, wenn die Messingbeschichtung eine Dicke von 0,05 µm bis 0,4 µm aufweist.

In einer bevorzugten Ausführung der Erfindung weist die Messingbeschichtung der Festigkeitsträger der beiden Arbeitslagen eine Dicke von 0,15 µm bis 0,35 µm auf und/ oder die Messingbeschichtung der Festigkeitsträger der Abdecklage weist eine Dicke von 0,05 µm bis 0,2 µm auf. Es hat sich folgender Zusammenhang gezeigt: je dünner die Messingbeschichtung ist, desto besser ist die Korrosionsbeständigkeit.

Zweckmäßig ist es, wenn die Abdecklage wenigstens einen Stahlkord aufweist, von dem wenigstens ein inneres Filament eine Zinkbeschichtung aufweist, wobei dieser Stahlkord vorzugsweise ein Kord der Konstruktion 1 + N ist. Die Korrosionsbeständigkeit ist weiter erhöht, indem ein inneres Filament anstatt mit Messing mit Zink beschichtet ist und als Opferanode dient. Die Haftkraft dieses Festigkeitsträgers ist nicht nennenswert reduziert, da für die Haftung zum Gummi die äußeren, messingbeschichteten Filamente des Stahlkordes maßgeblich verantwortlich sind.

Vorteilhaft ist es, wenn die Messingbeschichtung der Festigkeitsträger der beiden Arbeitslagen einen Kupferanteil von etwa 63 Gew.% aufweist. Diese Messingbeschichtung hat sich als besonders vorteilhaft für eine verbesserte Haftkraft bei leicht reduzierter Korrosionsbeständigkeit herausgestellt.

Vorteilhaft ist es, wenn die Messingbeschichtung der Festigkeitsträger der Abdecklage einen Kupferanteil von etwa 68 Gew% aufweist. Diese Messingbeschichtung hat sich als besonders vorteilhaft für eine verbesserte Korrosionsbeständigkeit bei leicht reduzierter Haftkraft herausgestellt.

Die nachfolgende Tabelle zeigt zwei Beispiele von Gürteln (Gürtel 1, Gürtel 2), die im erfindungsgemäßen Reifen eingesetzt werden können. Die beispielhaften Gürtel 1, 2 weisen eine Abdecklage und zwei Arbeitslagen auf. Die Gürtel 1, 2 enthalten in den Arbeits- und Abdecklagen messingbeschichtete Kordkonstruktionen aus HT (High Tensile)-Stahl. Es ist die Messingbeschichtung der bestimmten Kordkonstruktion in g/kg als auch die Beschichtungsdicke in µm angegeben. Es ist ersichtlich, dass die Stahlkorde der Abdecklage eines Gürtels vorzugsweise eine geringere Beschichtungsdicke als die Stahlkorde der Arbeitslagen aufweisen.

**Tab.**

| Gürtel | Gürtellage | Stahlkordkonstruktion | Beschichtung [g/kg] | Beschichtungsdicke [µm] |
|---|---|---|---|---|
| Gürtel 1 | Arbeitslagen | 3x0.20+6x0.35HT | 2,8 - 4,5 | 0,21 - 0,35 |
| | Abdecklage | 3x0.20+6x0.35HT | 1,2 - 2,8 | 0,08 - 0,21 |
| Gürtel 2 | Arbeitslagen | 1+5x0.40HT | 2,5 - 4 | 0,15 - 0,25 |
| | Abdecklage | 1+5x0.40HT | 1,0 - 2,5 | 0,05 - 0,15 |

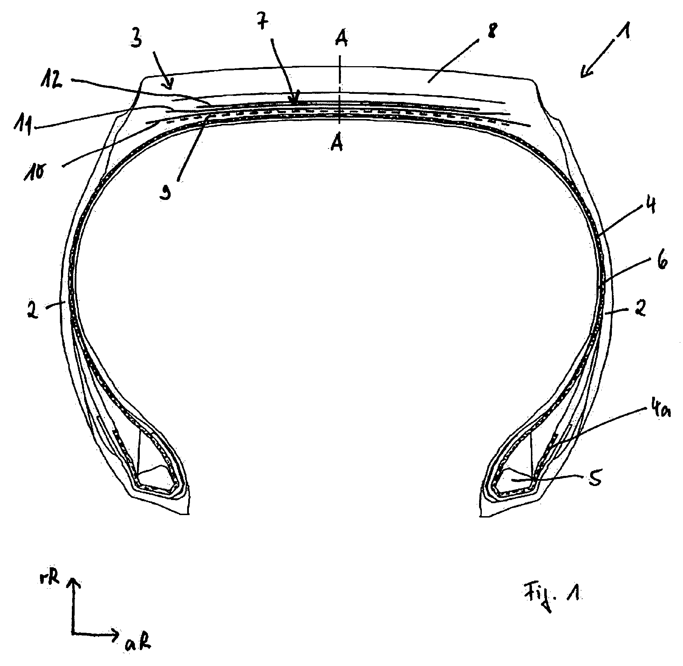

Weitere Merkmale, Vorteile und Einzelheiten der Erfindung werden nun anhand einer Zeichnung, die ein schematisches Ausführungsbeispiel darstellt, näher beschrieben. Die Fig. 1 zeigt einen Querschnitt durch einen erfindungsgemäßen Nutzfahrzeugluftreifen 1 radialer Bauart. Der Nutzfahrzeugluftreifen weist eine übliche Standardkonstruktion auf, mit zwei Seitenwänden 2, einem Kronenbereich 3, mit einer Karkasse 4 mit Stahlkorden, welche die Wulstkerne 5 von axial innen nach axial außen umläuft und in einem Karkasshochschlag 4a endet, mit einer luftdicht ausgeführten Innenschicht 6, einem mehrlagigen Gürtel 7 und einem Laufstreifen 8.

Der Gürtel 7 weist vier Gürtellagen 9, 10, 11 und 12 auf, wobei die vierte, radial äußerste Gürtellage 12 die geringste Breite von allen Lagen aufweist und die sogenannte Abdecklage bildet. Die erste Gürtellage 9 ist die sogenannte Sperrlage, die zweite Gürtellage 10 und die dritte Gürtellage 11 sind die sogenannten Arbeitslagen. Die breiteste Gürtellage ist die zweite Gürtellage 10, welche demnach die erste Gürtellage 9 komplett überdeckt. Die dritte Gürtellage 11 ist etwas breiter als oder gleich breit wie die erste Gürtellage 9. Sämtliche Gürtellagen 9, 10, 11, 12 bestehen aus in eine Gummimischung, der Gürtelgummierung, eingebetteten Festigkeitsträgern aus Stahlkord. Die Festigkeitsträger der Arbeitslagen 10, 11 und der Abdecklage 12 weisen beispielsweise die Konstruktion 3 x 0,2 mm + 6 x 0,35 mm aus HT-Stahlkord auf. Selbstverständlich können in den Gürtellagen auch Stahlkorde anderer Konstruktionen eingesetzt werden.

Die Stahlkorde in jeder der Lagen 9, 10, 11 und 12 verlaufen jeweils parallel zueinander und schließen mit der durch die Linie A-A angedeuteten Umfangsrichtung des Reifens bestimmte Winkel ein. Die Neigung der Stahlkorde zur Umfangsrichtung in den einzelnen Gürtellagen 9, 10, 11 und 12, beginnend bei der radial innersten Gürtellage 9, ist derart, dass die Abfolge RRLR oder RRLL (rechtssteigend, rechtssteigend, linkssteigend, rechtssteigend oder linkssteigend) vorliegt. Die Stahlkorde der ersten Gürtellage 9 schließen einen Winkel von 65° bis 45° mit der Umfangsrichtung A-A ein. Die Stahlkorde der zweiten, dritten und vierten Gürtellage 10, 11, 12 schließen einen Winkel von 30° bis 10° mit der Umfangsrichtung A-A ein.

Die Stahlkorde jeder dieser Gürtellagen 9, 10, 11, 12 sind zur guten Elastomerhaftung mit Messing beschichtet. Die Messingbeschichtung der Stahlkorde der beiden Arbeitslagen 10, 11 weisen einen Kupferanteil von 60 Gew.% bis 65 Gew.%, vorzugsweise von 63 Gew.% auf. Die Beschichtungsdicke des Messings beträgt zwischen 0,15 µm bis 0,35 µm. Die Messingbeschichtung der Stahlkorde der Abdecklage 12 weisen einen Kupferanteil von 66 Gew.% bis 70 Gew.%, vorzugsweise 68 Gew.% auf. Die Beschichtungsdicke des Messings beträgt zwischen 0,05 µm bis 0,2 µm.

### Bezugszeichenliste

### (Teil der Beschreibung)

- 1: Nutzfahrzeugluftreifen
- 2: Seitenwand
- 3: Kronenbereich
- 4: Karkasse
- 4a: Karkasshochschlag
- 5: Wulstkern
- 6: Innenschicht
- 7: Gürtel
- 8: Laufstreifen
- 9: Sperrlage
- 10: Arbeitslage
- 11: Arbeitslage
- 12: Abdecklage

- rR: radiale Richtung
- aR: axiale Richtung

## Patentansprüche

1. Fahrzeugluftreifen in Radialbauart, vorzugsweise Nutzfahrzeugluftreifen (1), mit einem Gürtel (7), welcher wenigstens drei Gürtellagen (10, 11, 12) aufweist, von denen zwei Gürtellagen als sogenannte Arbeitslagen (10, 11) ausgestaltet sind und von denen die radial äußerste Gürtellage als sogenannte Abdecklage (12) ausgestaltet ist, wobei jede dieser Gürtellagen (10, 11, 12) aus in Elastomer eingebetteten Festigkeitsträgern aus Stahlkord besteht und wobei die Stahlkorde jeder dieser drei Gürtellagen (10, 11, 12) zur guten Elastomerhaftung mit Messing beschichtet sind,
**dadurch gekennzeichnet, dass** die Messingbeschichtung der Festigkeitsträger der beiden Arbeitslagen (10, 11) einen Kupferanteil von 60 Gew.% bis 65 Gew.% aufweist und
dass die Messingbeschichtung der Festigkeitsträger der Abdecklage (12) einen Kupferanteil von 66 Gew.% bis 70 Gew.% aufweist.

2. Fahrzeugluftreifen nach Anspruch 1, **dadurch gekennzeichnet, dass** die Messingbeschichtung eine Dicke von 0,05 µm bis 0,4 µm aufweist.

3. Fahrzeugluftreifen nach Anspruch 1 oder 2, **dadurch gekennzeichnet, dass** die Messingbeschichtung der Festigkeitsträger der beiden Arbeitslagen (10, 11) eine Dicke von 0,15 µm bis 0,35 µm aufweist und/ oder dass die Messingbeschichtung der Festigkeitsträger der Abdecklage (12) eine Dicke von 0,05 µm bis 0,2 µm aufweist.

4. Fahrzeugluftreifen nach einem oder mehreren der vorangehenden Ansprüche,
**dadurch gekennzeichnet, dass** die Abdecklage (12) wenigstens einen Stahlkord aufweist, von dem wenigstens ein inneres Filament eine Zinkbeschichtung aufweist, wobei dieser Stahlkord vorzugsweise ein Kord der Konstruktion 1 + N ist.

5. Fahrzeugluftreifen nach einem oder mehreren der vorangehenden Ansprüche, **dadurch gekennzeichnet, dass** die Messingbeschichtung der Festigkeitsträger der beiden Arbeitslagen (10, 11) einen Kupferanteil von etwa 63 Gew.% aufweist.

6. Fahrzeugluftreifen nach einem oder mehreren der vorangehenden Ansprüche, **dadurch gekennzeichnet, dass** die Messingbeschichtung der Festigkeitsträger der Abdecklage (12) einen Kupferanteil von etwa 68 Gew.% aufweist.

## Claims

1. Pneumatic vehicle tyre of radial design, preferably a pneumatic commercial vehicle tyre (1), having a belt (7) that has at least three belt plies (10, 11, 12), of which two belt plies are configured as "working plies" (10, 11) and of which the radially outermost belt ply is configured as a "cover ply" (12), wherein each of said belt plies (10, 11, 12) consists of reinforcements made of steel cord embedded in elastomer and wherein the steel cords of each of said three belt plies (10, 11, 12) are coated with brass for good elastomer adhesion,
**characterized in that** the brass coating of the reinforcements of the two working plies (10, 11) has a copper content of 60% by weight to 65% by weight and
the brass coating of the reinforcements of the cover ply (12) has a copper content of 66% by weight to 70% by weight.

2. Pneumatic vehicle tyre according to Claim 1, **characterized in that** the brass coating has a thickness of 0.05 µm to 0.4 µm.

3. Pneumatic vehicle tyre according to Claim 1 or 2, **characterized in that** the brass coating of the reinforcements of the two working plies (10, 11) has a thickness of 0.15 µm to 0.35 µm and/or **in that** the brass coating of the reinforcements of the cover ply (12) has a thickness of 0.05 µm to 0.2 µm.

4. Pneumatic vehicle tyre according to one or more of the preceding claims, **characterized in that** the cover ply (12) has at least one steel cord, of which at least one inner filament has a zinc coating, wherein said steel cord is preferably a cord of construction 1 + N.

5. Pneumatic vehicle tyre according to one or more of the preceding claims, **characterized in that** the brass coating of the reinforcements of the two working plies (10, 11) has a copper content of about 63% by weight.

6. Pneumatic vehicle tyre according to one or more of the preceding claims, **characterized in that** the brass coating of the reinforcements of the cover ply (12) has a copper content of about 68% by weight.

## Revendications

1. Pneu de véhicule à structure radiale, de préférence pneu de véhicule utilitaire (1), comprenant une ceinture (7), qui comprend au moins trois nappes d'armature (10, 11, 12), dont deux nappes d'armature sont conçues comme ce que l'on appelle des nappes de travail (10, 11) et dont la nappe d'armature radialement la plus extérieure est conçue comme ce que l'on appelle une nappe de recouvrement (12), chacune de ces nappes d'armature (10, 11, 12) étant constituée de supports de résistance en câble métallique, incorporés dans un élastomère, et les câbles métalliques de chacune de ces trois nappes d'armature (10, 11, 12) étant, pour une bonne adhérence à l'élastomère, revêtus de laiton,
**caractérisé en ce que** le revêtement de laiton des supports de résistance des deux nappes de travail (10, 11) présente une teneur en cuivre de 60 % en poids à 65 % en poids, et que le revêtement de laiton des supports de résistance de la nappe de recouvrement (12) présente une teneur en cuivre de 66 % en poids à 70 % en poids.

2. Pneu de véhicule selon la revendication 1, **caractérisé en ce que** le revêtement de laiton présente une épaisseur de 0,05 µm à 0,4 µm.

3. Pneu de véhicule selon la revendication 1 ou 2, **caractérisé en ce que** le revêtement de laiton des supports de résistance des deux nappes de travail (10, 11) présente une épaisseur de 0,15 µm à 0,35 µm, et/ou que le revêtement de laiton des supports de résistance de la nappe de recouvrement (12) présente une épaisseur de 0,05 µm à 0,2 µm.

4. Pneu de véhicule selon l'une ou plusieurs des revendications précédentes, **caractérisé en ce que** la nappe de recouvrement (12) présente au moins un câble métallique, dont au moins un filament interne présente un revêtement de zinc, son câble métallique étant de préférence un câble de structure 1 + N.

5. Pneu de véhicule selon l'une ou plusieurs des revendications précédentes, **caractérisé en ce que** le revêtement de laiton des supports de résistance des deux nappes de travail (10, 11) présente une teneur en cuivre d'environ 63 % en poids.

6. Pneu de véhicule selon l'une ou plusieurs des revendications précédentes, **caractérisé en ce que** le revêtement de laiton des supports de résistance de la nappe de recouvrement (12) présente une teneur en cuivre d'environ 68 % en poids.
